(19) 

**Europäisches Patentamt**
**European Patent Office**
**Office européen des brevets**

(11) **EP 4 757 468 A1**

(12) **EUROPEAN PATENT APPLICATION**
published in accordance with Art. 153(4) EPC

(43) Date of publication:
**10.06.2026  Bulletin 2026/24**

(21) Application number: **24848093.1**

(22) Date of filing: **23.07.2024**

(51) International Patent Classification (IPC):
*H04W 72/23* (2023.01)

(52) Cooperative Patent Classification (CPC):
**H04L 5/00; H04W 24/08; H04W 72/23**

(86) International application number:
**PCT/CN2024/107008**

(87) International publication number:
**WO 2025/026135 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.07.2023  CN 202310948229**

(71) Applicant: **Vivo Mobile Communication Co., Ltd.
Dongguan, Guangdong 523863 (CN)**

(72) Inventor: **QU, Xin
Dongguan, Guangdong 523863 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **SIGNAL TRANSMISSION METHOD AND APPARATUS, DEVICE, SYSTEM AND STORAGE MEDIUM**

(57)    The present application relates to the technical field of communications, and discloses a signal transmission method and apparatus, a device, a system and a storage medium. The signal transmission method of embodiments of the present application comprises : a terminal receives first information from a network side device, the first information comprising first indication information and a first mapping mode, the first indication information being used for indicating information carried by a first waveform, and the first mapping mode being a mapping mode of the first waveform and a second waveform; and on the basis of the first information, the terminal detects a first signal, the first signal being a signal transmitted on the basis of the first waveform and the second waveform, wherein the first waveform at least comprises an OFDM waveform, and the second waveform at least comprises at least one of the following : an OOK waveform and an FSK waveform.

FIG. 5

**Description**

**CROSS-REFERENCE TO RELATED APPLICATIONS**

This application claims priority to Chinese Patent Application No. 202310948229.7, filed on July 28, 2023, which is incorporated herein by reference in its entirety.

**TECHNICAL FIELD**

This application relates to the field of communication technologies, and in particular, to a signal transmission method and apparatus, a device, a system, and a storage medium.

**BACKGROUND**

Terminals, each having a different signal waveform demodulation capability, exist for detection of a low-power signal, for example, a terminal that can demodulate an on-off keying (On-Off Keying, OOK) signal, a terminal that can demodulate a frequency-shift keying (Frequency-Shift Keying, FSK) signal, and a terminal that can demodulate an orthogonal frequency division multiplexing (Orthogonal Frequency Division Multiplexing, OFDM) signal.

A waveform generation method for the OOK signal and the FSK signal is: generating a feature information part of the OOK signal or the FSK signal through an OFDM sequence. For example, ON/OFF of the OOK signal is represented through different amplitude information, and the ON part of the OOK signal may be generated through an OFDM sequence with a constant amplitude, while the OFF correspondingly does not send a signal. Similarly, the FSK signal carries information by sending a signal at different frequencies. Therefore, the OFDM sequence with the constant amplitude may be sent at a corresponding frequency, and a signal is not sent at another frequency. For a terminal demodulating the OOK signal, only ON/OFF information can be demodulated, but an OFDM sequence generating the OOK signal cannot be demodulated. Similarly, for a terminal demodulating the FSK signal, only frequency information can be demodulated, but the OFDM sequence generating the FSK signal cannot be demodulated. However, for a terminal demodulating the OFDM signal, the OFDM sequence can further be demodulated except that the amplitude and the frequency information can be demodulated.

However, when terminals each having a different signal waveform demodulation capability exist in a cell, a low-power signal may be transmitted through a superposed waveform. Since solutions to determine how an OFDM sequence in the superposed waveform for generating feature information of an OOK signal or an FSK signal carries information and determine a mapping mode between the OFDM sequence and the feature information of the OOK signal or the FSK signal do not exist currently, the terminals cannot determine all information carried in the superposed waveform, leading to an increased complexity of detecting the low-power signal by the terminals, and a poor reliability of detecting the low-power signal.

**SUMMARY**

Embodiments of this application provide a signal transmission method and apparatus, a device, a system, and a storage medium, which can resolve the problem that a terminal cannot determine all information carried in a superposed waveform, and therefore the problems of an increased complexity of detecting a low-power signal by the terminal and a poor reliability of detecting the low-power signal.

According to a first aspect, a signal transmission method is provided. The method includes: A terminal receives first information from a network side device. The first information includes first indication information and a first mapping mode. The first indication information is used to indicate information carried in a first waveform. The first mapping mode is a mapping mode between the first waveform and a second waveform. The terminal detects a first signal based on the first information. The first signal is a signal transmitted based on the first waveform and the second waveform. The first waveform includes at least an OFDM waveform, and the second waveform includes at least one of an OOK waveform or an FSK waveform.

According to a second aspect, a signal transmission method is provided. The method includes: A network side device sends first information to a terminal. The first information includes first indication information and a first mapping mode. The first indication information is used to indicate information carried in a first waveform. The first mapping mode is a mapping mode between the first waveform and a second waveform. The first information is used to detect a first signal by the terminal. The first signal is a signal transmitted based on the first waveform and the second waveform. The first waveform includes at least an OFDM waveform, and the second waveform includes at least one of an OOK waveform or an FSK waveform.

According to a third aspect, a signal transmission apparatus is provided. The apparatus includes a receiving module and a detection module. The receiving module is configured to receive first information from a network side device. The first information includes first indication information and a first mapping mode, the first indication information is used to indicate information carried in a first waveform, and the first mapping mode is a mapping mode between the first waveform and a second waveform. The detection module is configured to detect a first signal based on the first information received by the receiving module, and the first signal is a signal transmitted based on the first waveform and the second waveform. The first waveform includes at least an OFDM waveform, and the second waveform includes at least one of an OOK waveform or an FSK waveform.

According to a fourth aspect, a signal transmission apparatus is provided. The apparatus includes a sending module. The sending module is configured to send first information to a terminal. The first information includes first indication information and a first mapping mode. The first indication information is used to indicate information carried in a first waveform. The first mapping mode is a mapping mode between the first waveform and a second waveform. The first information is used to detect a first signal by the terminal. The first signal is a signal transmitted based on the first waveform and the second waveform. The first waveform includes at least an OFDM waveform, and the second waveform includes at least one of an OOK waveform or an FSK waveform.

According to a fifth aspect, a terminal is provided. The terminal includes a processor and a memory. The memory stores a program or an instruction executable in the processor. The program or the instruction, when executed by the processor, implements the steps of the method in the first aspect.

According to a sixth aspect, a terminal is provided, including a processor and a communication interface. The communication interface is configured to receive first information from a network side device. The first information includes first indication information and a first mapping mode. The first indication information is used to indicate information carried in a first waveform. The first mapping mode is a mapping mode between the first waveform and a second waveform. The processor is configured to detect a first signal based on the first information received by the receiving module, and the first signal is a signal transmitted based on the first waveform and the second waveform. The first waveform includes at least an OFDM waveform, and the second waveform includes at least one of an OOK waveform or an FSK waveform.

According to a seventh aspect, a network side device is provided. The network side device includes a processor and a memory. The memory stores a program or an instruction executable in the processor. The program or the instruction, when executed by the processor, implements the steps of the method in the second aspect.

According to an eighth aspect, a network side device is provided, including a processor and a communication interface. The communication interface is configured to send first information to a terminal. The first information includes first indication information and a first mapping mode. The first indication information is used to indicate information carried in a first waveform. The first mapping mode is a mapping mode between the first waveform and a second waveform. The first information is used to detect a first signal by the terminal. The first signal is a signal transmitted based on the first waveform and the second waveform. The first waveform includes at least an OFDM waveform, and the second waveform includes at least one of an OOK waveform or an FSK waveform.

According to a ninth aspect, a readable storage medium is provided. The readable storage medium stores a program or an instruction. The program or the instruction, when executed by a processor, implements the steps of the method in the first aspect, or implements the steps of the method in the second aspect.

According to a tenth aspect, a wireless communication system is provided, including a terminal and a network side device. The terminal may be configured to perform the steps of the method in the first aspect. The network side device may be configured to perform the steps of the method in the second aspect.

According to an eleventh aspect, a chip is provided. The chip includes a processor and a communication interface. The communication interface is coupled to the processor. The processor is configured to run a program or an instruction to implement the method in the first aspect, or implement the method in the second aspect.

According to a twelfth aspect, a computer program/program product is provided. The computer program/program product is stored in a storage medium. The program/program product is executed by at least one processor to implement the steps of the signal transmission method in the first aspect, or implement the steps of the signal transmission method in the second aspect.

In embodiments of this application, the terminal may receive the first information of the first signal from the network side, and detect, based on the first information, that is, the information carried in the first waveform and the mapping mode between the first waveform and the second waveform, the first signal transmitted according to the first waveform and the second waveform. In other words, in this solution, the information carried in the first waveform is indicated to the terminal through the first indication information, and the mapping mode between the information carried in the first waveform and information carried in the second waveform can be determined by the information carried in the first waveform and the mapping mode for the superposed waveform (including the first waveform and the second waveform). That is to say, the mapping mode between the OFDM sequence and the feature information of the OOK signal or the FSK signal is obtained, so as to obtain the information carried in the second waveform, so that the terminal can accurately detect the low-power signal based on the first waveform and the second waveform, thereby obtaining the information carried in the first waveform and the second waveform, that is, all information carried in the superposed waveform, reducing

## EP 4 757 468 A1

complexity of detecting the low-power signal, and improving reliability of detecting the low-power signal.

## BRIEF DESCRIPTION OF THE DRAWINGS

FIG. 1 is a schematic architectural diagram of a wireless communication system according to an embodiment of this application;
FIG. 2 is a schematic diagram of an operating principle of a low-power terminal according to the related art;
FIG. 3 is a schematic diagram of an OOK signal waveform and an FSK signal waveform according to the related art;
FIG. 4 is a schematic diagram of a superposed waveform of an OOK signal and an FSK signal according to the related art;
FIG. 5 is a schematic diagram I of a signal transmission method according to an embodiment of this application;
FIG. 6 is a schematic diagram I of an example of a subset division method according to an embodiment of this application;
FIG. 7 is a schematic diagram II of an example of a subset division method according to an embodiment of this application;
FIG. 8 is a schematic diagram II of a signal transmission method according to an embodiment of this application;
FIG. 9 is a schematic structural diagram I of a signal transmission apparatus according to an embodiment of this application;
FIG. 10 is a schematic structural diagram II of a signal transmission apparatus according to an embodiment of this application;
FIG. 11 is a schematic diagram of a hardware structure of a communication device according to an embodiment of this application;
FIG. 12 is a schematic diagram of a hardware structure of a terminal according to an embodiment of this application; and
FIG. 13 is a schematic diagram of a hardware structure of a network side device according to an embodiment of this application.

## DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used to distinguish between similar objects rather than describe a specific order or sequence. It should be understood that the terms used in this case may be transposed where appropriate, so that embodiments of this application may be implemented in a sequence other than those illustrated or described herein. In addition, objects defined by "first" and "second" are generally of the same class and do not limit a quantity of objects. For example, one first object may be arranged, or a plurality of objects may be arranged. In addition, "or" in this application indicates at least one of connected objects. For example, "A or B" encompasses three solutions: solution I: A is included but B is not included; solution II: B is included but A is not included; and solution III: both A and B are included. A character "/" generally indicates an "or" relationship between associated objects.

In the specification and claims of this application, the terms "at least one (item)", "at least one of", and the like refer to any one, any two, or a combination of two or more of the objects included thereof. For example, at least one (item) of a, b, or c may represent "a", "b", "c", "a and b", "a and c", "b and c", and "a, b, and c", where a, b, and c may be one or more. Similarly, "at least two (items)" means two or more, and the expressed meaning thereof is similar to that of "at least one (item)".

A term "indication" in this application may be a direct indication (or an explicit indication) or an indirect indication (or an implicit indication). The direct instruction may be understood as that a sending party clearly informs a receiving party of specific information, an operation to be performed, or a request result in the sent instruction. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. Nevertheless, the technologies may also be applied to a system other than the NR system, such as a 6th generation (6th Generation, 6G) communication system.

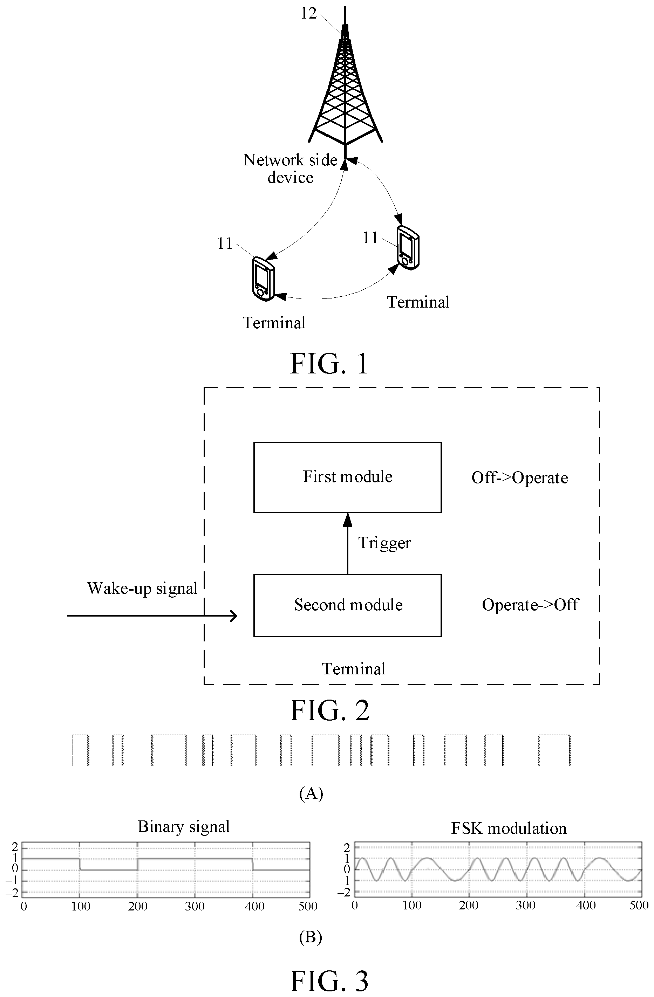

FIG. 1 is a block diagram showing a wireless communication system to which an embodiment of this application may be applied. The wireless communication system includes a terminal 11 and a network side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes: a smart watch, a smart bracelet, a smart headset, smart glasses, smart jewelry (a smart wristlet, a smart chain bracelet, a smart ring, a smart necklace, a smart ankle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

Some concepts and/or terms involved in a signal transmission method and apparatus, a device, a system, and a storage medium provided in embodiments of this application are explained below.

1. A low-power terminal

A low-power (Low Power, LP) wake-up receiver (Wake-Up Receiver, WUR)/(Wake-Up Signal, WUS) is introduced into a mobile cellular system. An operating principle of the LP WUR is as follows. A receiving end includes a first module and a second module. The first module is a primary communication module, and is configured to receive communication data transmitted by a sending end and send communication data. The second module is a low-power module, and is configured to receive a low-power wake-up signal and a low-power beacon signal/hold signal sent by the sending end. The low-power wake-up signal is used to wake up the primary communication module of the receiving end. The low-power beacon signal/hold signal is used to provide time reference information and another information for receiving the low-power wake-up signal, and may further provide wake-up link channel quality measurement. As shown in FIG. 2, when the first module is not awakened by the second module, the first module is always in an off state, and does not send or receive data. When downlink data arrives, the second module detects the wake-up signal sent by the sending end, and the wake-up signal includes information about the terminal, the second module triggers the first module to switch from the off state to an operating state, to perform data receiving and sending. The second module may be continuously or discontinuously enabled. When the second module is enabled, the second module may receive the low-power wake-up signal and the low-power beacon signal.

An OOK modulation may be used for the low-power wake-up signal, so that a wake-up module may detect the wake-up signal in a manner of envelope detection, which may reduce power consumption to a microwatt order. At the sending end, two manners of generating the low-power wake-up signal exist. (1) An OOK signal is directly generated in a time domain. (2) A generation structure of an OFDM signal is multiplexed, where a signal is generated in a frequency domain and then inverse Fourier transformation is performed on the signal to a time domain to indirectly obtain an OOK signal. An advantage of Manner (2) is that complexity of a sending end in an existing mobile communication system is not additionally increased, to generate the OOK signal. Therefore, the manner is more suitable for being compatible with an existing mobile system, and the sending end does not need to be additionally enhanced.

2. A low-power signal waveform

To reduce power consumption of the LP WUR and save power, the low-power signal is usually sent through a simple waveform, for example, an OOK signal waveform shown in (A) in FIG. 3 or an FSK signal waveform shown in (B) in FIG. 3. Therefore, the terminal may identify the low-power signal through a simple energy detection, a frequency detection, or the like.

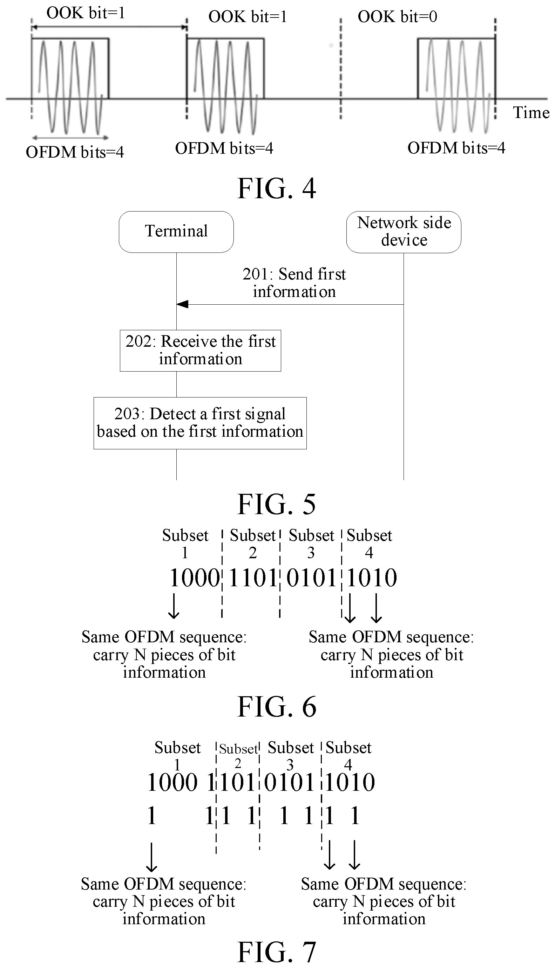

An existing NR system generally uses an OFDM signal modulation manner. In this way, the OOK signal or the FSK signal may be generated through an OFDM signal generation manner. For example, ON/OFF of the OOK signal is represented through different amplitude information, and the ON part of the OOK signal may be generated through an OFDM sequence with a constant amplitude, while the OFF correspondingly does not send a signal. Similarly, the FSK signal carries information by sending a signal at different frequencies. Therefore, the OFDM sequence with the constant amplitude may be sent at a corresponding frequency, and a signal is not sent at another frequency. Further, in an OFDM modulation sequence demodulating ON, information may also be carried through the sequence. For example, two sequences respectively represent information of 0 and 1, or 4 sequences respectively represent information of 00, 01, 10, and 11, as shown in FIG. 4.

For a terminal demodulating the OOK signal, only ON/OFF information can be demodulated, but an OFDM sequence generating the OOK signal cannot be demodulated. Similarly, for a terminal demodulating the FSK signal, only frequency information can be demodulated, but the OFDM sequence generating the FSK signal cannot be demodulated. However, for a terminal that can demodulate the OFDM signal, the OFDM sequence may further be demodulated.

A signal transmission method provided in embodiments of this application is described below in detail through some embodiments and application scenarios thereof with reference to the accompanying drawings.

Currently, when terminals each having a different signal waveform demodulation capability exist in a cell, a low-power signal may be transmitted through a superposed waveform. Since solutions to determine how an OFDM sequence in the superposed waveform for generating feature information of an OOK signal or an FSK signal carries information and determine a mapping mode between the OFDM sequence and the feature information of the OOK signal or the FSK signal do not exist currently, the terminals cannot determine all information carried in the superposed waveform, leading to an increased complexity of detecting the low-power signal by the terminals, and a poor reliability of detecting the low-power signal.

Embodiments of this application provide a signal transmission method. The terminal may receive first information of a first signal from a network side, and detect, based on the first information, that is, information carried in a first waveform and a mapping mode between the first waveform and the second waveform, the first signal transmitted according to the first waveform and the second waveform. In other words, in this solution, the information carried in the first waveform is indicated to the terminal through the first indication information, and the mapping mode between the information carried in the first waveform and information carried in the second waveform can be determined by the information carried in the first waveform and the mapping mode for the superposed waveform (including the first waveform and the second waveform). That is to say, the mapping mode between the OFDM sequence and the feature information of the OOK signal or the FSK signal is obtained, so as to obtain the information carried in the second waveform, so that the terminal can accurately detect the low-power signal based on the first waveform and the second waveform, thereby obtaining the information carried in the first waveform and the second waveform, that is, all information carried in the superposed waveform, reducing complexity of detecting the low-power signal, and improving reliability of detecting the low-power signal.

It should be noted that in embodiments of this application, the feature information may also be referred to as a feature unit, and the OFDM sequence is a feature sequence.

Embodiments of this application provide a signal transmission method. FIG. 5 is a flowchart of a signal transmission method according to an embodiment of this application. As shown in FIG. 5, the signal transmission method provided in this embodiment of this application may include step 201 to step 203 below.

Step 201: A network side device sends first information to a terminal.

Step 202: The terminal receives the first information from the network side device.

In this embodiment of this application, the foregoing first information includes first indication information and a first mapping mode, the first indication information is used to indicate information carried in a first waveform, and the first mapping mode is a mapping mode between the first waveform and a second waveform. The foregoing first information is used by the terminal to detect a first signal. The first signal is a signal transmitted based on the first waveform and the second waveform.

In this embodiment of this application, the foregoing first signal is a signal formed by superposing the first waveform and the second waveform.

In this embodiment of this application, the foregoing first waveform includes at least an OFDM waveform. The foregoing second waveform includes at least one of an OOK waveform or an FSK waveform.

Optionally, in this embodiment of this application, the foregoing first signal includes at least one of a low-power wake-up signal, a low-power beacon signal, a low-power hold signal, a low-power synchronization signal, or a low-power reference signal.

Optionally, in this embodiment of this application, the foregoing first indication information is specifically used to indicate at least one of the following:

at least one feature sequence of the first waveform and information carried in each of the at least one feature sequence, where the feature sequence is a feature sequence for generating the first signal; or
a type of the information carried in the first waveform.

Optionally, in this embodiment of this application, the foregoing feature sequence may be an OFDM sequence for generating the first signal.

Optionally, in this embodiment of this application, when the foregoing first indication information is specifically used to indicate a type of the information carried in the first waveform, the information carried in the foregoing first waveform satisfies any one of the following:

information carried in all feature sequences of the first waveform is the same as information carried in the second waveform;
the information carried in all feature sequences of the first waveform includes the information carried in the second waveform and additional information; or
all feature sequences of the first waveform carry only the additional information other than the information carried in the second waveform.

It should be noted that the information carried in the first waveform may include bit information carried in the first waveform, and the additional information refers to information other than the information carried in the second waveform.

Optionally, in this embodiment of this application, the foregoing first mapping mode may be a mapping mode between a feature sequence of the first waveform and a feature unit of the second waveform.

Optionally, in this embodiment of this application, the foregoing first mapping mode includes any one of the following:

dividing a set of feature units of the second waveform into subsets each including M feature units, to obtain K subsets, where the M feature units include at least one of first feature units and second feature units, all first feature units included in each subset are mapped to a same feature sequence of the first waveform, and M and K are both positive integers;
dividing a set of feature units of the second waveform into subsets each including M first feature units, to obtain K subsets, where the M first feature units included in each subset are mapped to a same feature sequence of the first waveform, and M and K are both positive integers;
mapping each first feature unit of the second waveform to a feature sequence of the first waveform independently; or
mapping all first feature units of the second waveform to the same feature sequence of the first waveform.

It may be understood that all first feature units included in each subset being mapped to the same feature sequence of the first waveform and the M first feature units included in each subset being mapped to the same feature sequence of the first waveform both refer to that the first feature units of the second waveform are generated through the feature sequence of the first waveform.

It should be noted that the set of feature units of the forgoing second waveform is divided into subsets each including M feature units. In other words, subsets each including M feature units are divided into subsets based on a quantity of feature units. During each division herein, the M feature units may be M first feature units, or may be M second feature units, or may include some first feature units and some second feature units.

It may be understood that each first feature unit of the second waveform being independently mapped to a feature sequence of the first waveform refers to generating a first feature unit of the second waveform through the feature sequence of the first waveform.

It may be understood that all first feature units of the second waveform being mapped to the same feature sequence of the first waveform refers to that all first feature units of the second waveform are generated through the feature sequence of the first waveform.

Optionally, in this embodiment of this application, the first feature units or the second feature units included in the set of feature units of the foregoing second waveform correspond to bits before source bit encoding, or the first feature units or the second feature units included in the set of feature units of the foregoing second waveform correspond to bits after the source bit encoding, where

the encoding includes Manchester encoding.

Optionally, in this embodiment of this application, the first feature units of the foregoing second waveform are constituted by a part for generating a to-be-transmitted signal by using the first waveform, and the second feature units of the second waveform are constituted by a part for generating the to-be-transmitted signal without using the first waveform.

Optionally, in this embodiment of this application, the first feature unit of the foregoing second waveform may be an OOK ON chip, and the second feature unit of the foregoing second waveform may be an OOK OFF chip.

A specific solution of the first mapping mode provided in embodiments of this application is described below through specific examples.

Implementation 1: Assuming that $2^N$ OFDM sequences with a length L carry $N \geq 1$ pieces of bit information, an OOK ON chip is generated through the OFDM sequences.

Implementation 1-1: All OOK ON chips included in a subset carry the same bit information. In other words, a plurality of ON chips are generated through the same OFDM sequence. The terminal receives waveform related information (that is, the first information) of a first signal sent by a network side, including a subset division method (that is, the foregoing first mapping mode), and a mapping relationship (that is, the foregoing first indication information) between an OFDM sequence and bit information.

Subset division method 1:

An OOK ON/OFF chip set included in a time domain of a low-power signal is sequentially divided into subsets including M chips (ON or OFF), which is divided into K subsets in total.

Subset division method 2:

An OOK ON/OFF chip set included in a low-power signal is sequentially divided into subsets including M ON chips, which is divided into K subsets in total.

The terminal receives the low-power signal based on the superposed waveform sent by the network side device. In addition to demodulation of ON/OFF information, the terminal having an OFDM detection capability may further demodulate the OFDM sequence used for generating an OOK ON chip. The terminal determines the bit information carried in the OFDM waveform based on the foregoing subset division method and the mapping relationship between the OFDM sequence and the bit information. Each subset carries N pieces of bit information, and the K subsets carry N*K pieces of bit information in total.

Optionally, a structure of the foregoing low-power signal may include one of the following: at least one OOK sequence, payload (payload) data based on OOK modulation, or an OOK sequence of a payload data prefix based on OOK modulation. For the three structures, each OOK sequence or an OOK sequence and a payload based on the OOK modulation are respectively divided into subsets.

Specifically, for the foregoing first structure, that is, the at least one OOK sequence, for example, the low-power signal includes an OOK sequence. An example of the sequence is 1000 1101 0101 1010. Manchester (Manchester) encoding is not used for the sequence. Therefore, "1" in the sequence is represented by an ON chip, and "0" is represented by an OFF chip. Based on the subset division method 1 and subset division method 2 above, and examples of different bit information numbers carried in the OFDM shown in FIG. 6 and FIG. 7, FIG. 6 shows the subset division method 1, and FIG. 7 shows the subset division method 2.

The subset division method 1 does not limit a quantity of the ON chips included in the OOK sequence, and the bit information may be carried through an OFDM generation sequence corresponding to at least one ON included in the subset. For example, the information carried in the OFDM generation sequence corresponding to the at least one OOK ON chip included in the subset is all ON/OFF chips included in the subset. For example, bit information carried in the OFDM generation sequence corresponding to the ON chip included in the subset 1 is 1000. For example, the bit information carried in the OFDM generation sequence corresponding to the ON chip included in the subset 2 is 1101, and so on. In particular, when a subset includes only the OFF chip, the subset does not send an OFDM sequence, which corresponds to that the subset includes only the OFF chip.

The subset division method 2 limits a quantity of the ON chips included in the OOK sequence. In other words, a quantity of ON chips included in different OOK sequences are equal and may be evenly divided by a quantity of subsets.

For the foregoing second structure, that is, the payload data based on the OOK modulation, the sending end may use a manner of combining with the Manchester encoding. In this case, due to the Manchester encoding, for the subset division method 1 and the subset division method 2, ON chips and OFF chips included in each subset are equal. Therefore, the subset division method 1 is equivalent to the subset division method 2. Details are shown in the following examples.

The payload includes information bits 12 and CRC 8 bits, and a total of 20 bits. After the Manchester encoding is used, a bit 1 is represented by an ON chip+OFF chip, a bit 0 is represented by an OFF chip+ON chip, and payloads before and after the Manchester encoding are as follows.

Before the Manchester encoding: 1010 0011 1100 1011 0101
After the Manchester encoding: 10 01 10 01 01 01 10 10 10 10 01 01 10 01 10 10 01 10 01 10

Therefore, the subset division method 1 and the subset division method 2 are as follows.

10 01 | 10 01 | 01 01 | 10 10 | 10 10 | 01 01 | 10 01 | 10 10 | 01 10 | 01 10

It can be learned based on the Manchester encoding that, after encoding, the quantity of the ON chips included in the payload and the CRC is equal to the quantity of the OFF chips. Therefore, the subset division method 1 is equivalent to the subset division method 2.

When the payload data based on OOK modulation does not use the Manchester encoding, the subset division method is the same as the method of the foregoing first structure (that is, the at least one OOK sequence).

For the third structure above, that is, the OOK sequence of the payload data prefix based the OOK modulation, the subset division method may use the method of the first structure (that is, at least one OOK sequence) or the second structure (that is, payload data based on OOK modulation) above, and the payload data based on the OOK modulation and an OOK sequence part are respectively divided into subsets.

Implementation 1-2: Each OOK ON chip independently carries bit information, and is not divided into subsets

In this implementation, an OFDM sequence corresponding to each OOK ON chip that generates the ON chip independently carries the bit information, and bit information carried in a plurality of OFDM sequences corresponding to different ON chips is independent of each other and is not redundant.

For the low-power signal structure, that is, the at least one OOK sequence, the payload data based on the OOK modulation, or the OOK sequence of the payload data prefix based on the OOK modulation, when not combined with the Manchester encoding, the quantity of the ON chips included in the low-power signal transmitted for a plurality of times may be different, resulting in different bit information transmitted by the OFDM corresponding to each transmission. Therefore, the method is more suitable for being used in combination with the Manchester encoding.

Implementation 2: The OFDM sequence carries N<1 bit, that is, an OOK ON chip is generated through a determined OFDM sequence.

In this implementation, the OFDM sequence corresponding to each OOK ON chip that generates the ON chip is a same sequence. The OFDM sequence is used to represent the OOK ON chip, and does not additionally carry information. Therefore, for the low-power signal obtained based on the superposed waveform according to this method, the OFDM waveform carries the same bit information as the OOK waveform. In this case, reliability and a transmission distance of the low-power signal can be improved.

Specifically, for the low-power signal structure, that is, the at least one OOK sequence, the payload data based on the OOK modulation, or the OOK sequence of the payload data prefix based on the OOK modulation, when the Manchester encoding is used, a bit 1 is represented by an ON chip+OFF chip, and a bit 0 is represented by the OFF chip+ON chip. When the Manchester encoding is not used, a bit 1 is represented through the ON chip, a bit 0 is represented through the OFF chip, each OOK ON chip is generated by the same OFDM sequence, and each OOK OFF chip is not sent.

In this way, conditions of various mapping modes in Implementation 1 and Implementation 2 above are shown in the following Table 1.

Table 1

| | low-power signal structure | | |
| --- | --- | --- | --- |
| | At least one OOK sequence | Payload data based on OOK modulation | OOK sequence of a payload data prefix based on OOK modulation |
| The number of bits carried in the OFDM waveform is equal to the number of bits carried in the OOK waveform | When the Manchester encoding is not used: the subset division method 1 in Implementation 1-1, or Implementation 2; and when the Manchester encoding is used, the subset division method 1 and the subset division method 2 in Implementation 1-1, or Implementation 1-2, or Implementation 2. | | |

(continued)

| | low-power signal structure | | |
|---|---|---|---|
| | At least one OOK sequence | Payload data based on OOK modulation | OOK sequence of a payload data prefix based on OOK modulation |
| The number of bits carried in the OFDM waveform is greater than the number of bits carried in the OOK waveform | When the Manchester encoding is not used: the subset division method 1 in Implementation 1-1; and when the Manchester encoding is used: the subset division method 1 and the subset division method 2 in Implementation 1-1, or Implementation 1-2. | | |
| The number of bits carried in the OFDM waveform is less than the number of bits carried in the OOK waveform | When the Manchester encoding is not used: the subset division method 1 in Implementation 1-1; and when the Manchester encoding is used: the subset division method 1 and the subset division method 2 in Implementation 1-1. | | |

Implementation 3: The transmission solution of the low-power signal based on a superposed waveform of the OOK and the OFDM in Implementation 1 and Implementation 2 above may be further extended to a transmission solution based on a superposed waveform of the FSK, the OOK, and the OFDM. Specifically, the solution of the superposed waveform of the OOK and the OFDM in Implementation 1 and Implementation 2 above may be applied to each frequency domain branch of the FSK. For example, the FSK has $2^M$ frequency domain branches in total, each frequency domain branch indicates a code element in the M pieces of bit information, each frequency domain branch uses a superposed waveform of the OOK and the OFDM, and information carried in the superposed waveform of the OOK and the OFDM is represented by J bits. Therefore, based on the superposed waveform of the FSK, the OOK, and the OFDM, M*J pieces of bit information in total are carried, M and J being positive integers.

Optionally, in this embodiment of this application, the foregoing terminal has a capability of detecting the first waveform.

In this embodiment of this application, the foregoing plurality of manners of generating the bit information carried in the OFDM sequence of the OOK ON chip may be flexibly applied to a plurality of scenarios in which the same bit or different bits are carried in the OFDM waveform and the OOK waveform, and different low-power signal structure types.

In a condition, when the OFDM waveform carries the same bit information as the OOK waveform, reliability and a transmission distance of the low-power signal may be improved for the terminal having an OFDM detection capability.

In another condition, when the OFDM waveform carries different bit information from the OOK waveform, the number (including the bit information carried in the OOK waveform and the bit information carried in the OFDM waveform) of the bit information carried in the low-power signal may be increased for the terminal having an OFDM detection capability.

In still another condition, when the OFDM waveform carries the bit information carried in the OOK waveform and additional bit information, the number of bit information carried in the low-power signal may be increased, and reliability and a transmission distance of the low-power signal may also be improved for the terminal having an OFDM detection capability.

Step 203: The terminal detects a first signal based on the first information.

In this embodiment of this application, the foregoing first signal is a signal transmitted based on the first waveform and the second waveform.

In this embodiment of this application, the terminal may perform amplitude detection on the first signal based on the foregoing first information, so as to demodulate information (for example, the bit information) carried in the first waveform and the second waveform.

In this embodiment of this application, the low-power signal is transmitted based on the superposed waveform of the OOK and the OFDM. The OOK ON chip is generated through the OFDM sequence. The terminal having only an OOK detection capability is configured to perform amplitude detection on the received low-power signal, determine the ON/OFF chip, and obtain information carried in the OOK waveform. The terminal having an OFDM detection capability may be configured to perform amplitude detection on the received low-power signal, determine the ON/OFF chip, and obtain information carried in the OOK waveform. Further, when the terminal having an OFDM detection capability learns that the OFDM sequence of the OOK ON chip is generated, the terminal may further detect the OFDM sequence, and obtain information carried in the OFDM waveform.

For the low-power signal transmitted based on the superposed waveform of the OOK and the OFDM:
The OFDM waveform may carry the same bit information as the OOK waveform. In this case, for the terminal having an OFDM detection capability, compared with the terminal having only an OOK detection capability, reliability and a transmission distance of the low-power signal may be improved.

The OFDM waveform may further carry different bit information from the OOK waveform. In this case, for the terminal having an OFDM detection capability, compared with the terminal having only an OOK detection capability, the number (including the bit information carried in the OOK waveform and the bit information carried in the OFDM waveform) of the bit information carried in the low-power signal may be increased.

The OFDM waveform may further carry the bit information carried in the OOK waveform and additional bit information. In this case, for the terminal having an OFDM detection capability, compared with the terminal having only an OOK detection capability, the number of bit information carried in the low-power signal may be increased, and reliability and a transmission distance of the low-power signal may also be improved.

It should be noted that, for the terminal having only an OOK detection capability, because the terminal can only detect the OOK waveform, the low-power signal is transmitted based on the superposed waveform of the OOK and the OFDM, and compared with the low-power signal transmitted based on the single OOK waveform, a performance gain does not exist.

In the signal transmission method provided in embodiments of this application, the terminal may receive the first information of the first signal from the network side, and detect, based on the first information, that is, the information carried in the first waveform and the mapping mode between the first waveform and the second waveform, the first signal transmitted according to the first waveform and the second waveform. In other words, in this solution, the information carried in the first waveform is indicated to the terminal through the first indication information, and the mapping mode between the information carried in the first waveform and information carried in the second waveform can be determined by the information carried in the first waveform and the mapping mode for the superposed waveform (including the first waveform and the second waveform). That is to say, the mapping mode between the OFDM sequence and the feature information of the OOK signal or the FSK signal is obtained, so as to obtain the information carried in the second waveform, so that the terminal can accurately detect the low-power signal based on the first waveform and the second waveform, thereby obtaining the information carried in the first waveform and the second waveform, that is, all information carried in the superposed waveform, reducing complexity of detecting the low-power signal, and improving reliability of detecting the low-power signal.

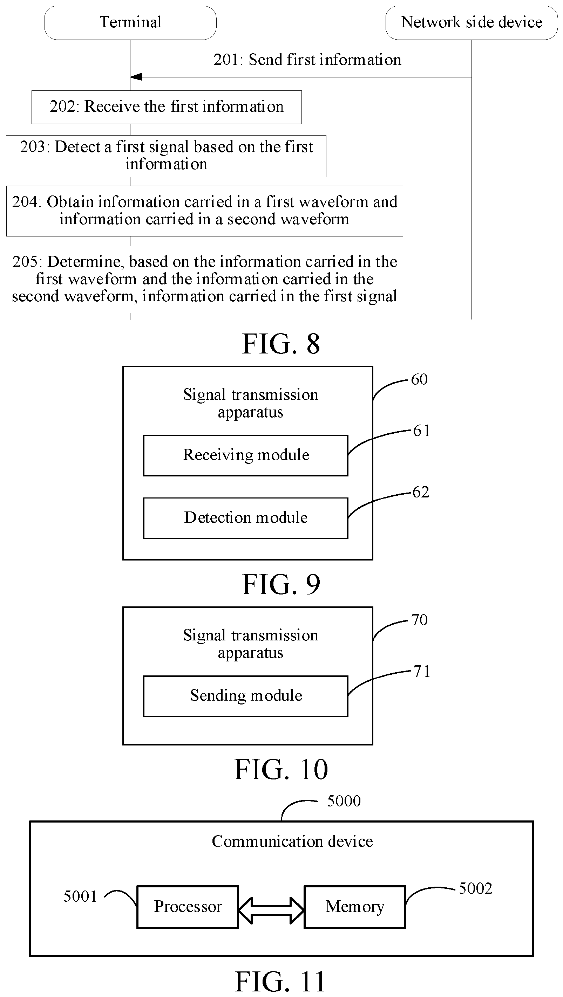

Optionally, in embodiments of this application, with reference to FIG. 5 and as shown in FIG. 8, after step 203 above, the signal transmission method provided in this embodiment of this application further includes step 204 and step 205 below.

Step 204: The terminal obtains the information carried in the first waveform and the information carried in the second waveform.

In this embodiment of this application, the information carried in the foregoing first waveform and the information carried in the second waveform may be obtained by the terminal by detecting the first signal.

Step 205: The terminal determines, based on the information carried in the first waveform and the information carried in the second waveform, information carried in the first signal.

In this embodiment of this application, the terminal may combine the information carried in the first waveform and the information carried in the second waveform, so as to obtain the information carried in the first signal.

The foregoing method embodiments or various possible implementations of the method embodiments may be separately performed, or any two or more may be performed in combination with each other. Specifically, the method embodiments or the possible implementations may be determined based on an actual use requirement, which is not limited in embodiments of this application.

The signal transmission method provided in embodiments of this application may be performed by a signal transmission apparatus. In embodiments of this application, the signal transmission apparatus provided in embodiments of this application is described by using an example in which the signal transmission apparatus performs the signal transmission method.

FIG. 9 is a possible schematic structural diagram of a signal transmission apparatus involved in an embodiment of this application. As shown in FIG. 9, the signal transmission apparatus 60 may include a receiving module 61 and a detection module 62.

The receiving module 61 is configured to receive first information from a network side device, where the first information includes first indication information and a first mapping mode, the first indication information is used to indicate information carried in a first waveform, and the first mapping mode is a mapping mode between the first waveform and a second waveform. The detection module 62 is configured to detect a first signal based on the first information received by the receiving module 61, and the first signal is a signal transmitted based on the first waveform and the second waveform. The first waveform includes at least an OFDM waveform, and the second waveform includes at least one of an OOK waveform or an FSK waveform.

An embodiment of this application provides a signal transmission apparatus. The signal transmission apparatus may receive the first information of the first signal from the network side, and detect, based on the first information, that is, the information carried in the first waveform and the mapping mode between the first waveform and the second waveform, the first signal transmitted according to the first waveform and the second waveform. In other words, in this solution, the information carried in the first waveform is indicated to the terminal through the first indication information, and the mapping mode between the information carried in the first waveform and information carried in the second waveform can be determined by the information carried in the first waveform and the mapping mode for the superposed waveform (including the first waveform and the second waveform). That is to say, the mapping mode between the OFDM sequence and the feature information of the OOK signal or the FSK signal is obtained, so as to obtain the information carried in the second waveform, so that the terminal can accurately detect the low-power signal based on the first waveform and the second waveform, thereby obtaining the information carried in the first waveform and the second waveform, that is, all information carried in the superposed waveform, reducing complexity of detecting the low-power signal, and improving reliability of detecting the low-power signal.

In a possible implementation, the foregoing first indication information is specifically used to indicate at least one of the following:

at least one feature sequence of the first waveform and information carried in each of the at least one feature sequence, where the feature sequence is a feature sequence for generating the first signal; or

a type of the information carried in the first waveform.

In a possible implementation, the foregoing first indication information is specifically used to indicate a type of information carried in the first waveform, and the information carried in the foregoing first waveform satisfies any one of the following:

information carried in all feature sequences of the first waveform is the same as information carried in the second waveform;

the information carried in all feature sequences of the first waveform includes the information carried in the second waveform and additional information; or

all feature sequences of the first waveform carry only the additional information other than the information carried in the second waveform.

In a possible implementation, the foregoing first mapping mode includes any one of the following:

dividing a set of feature units of the second waveform into subsets each including M feature units, to obtain K subsets, where the M feature units include at least one of first feature units and second feature units, all first feature units included in each subset are mapped to a same feature sequence of the first waveform, and M and K are both positive integers;

dividing a set of feature units of the second waveform into subsets each including M first feature units, to obtain K subsets, where the M first feature units included in each subset are mapped to a same feature sequence of the first waveform, and M and K are both positive integers;

mapping each first feature unit of the second waveform to a feature sequence of the first waveform independently; or

mapping all first feature units of the second waveform to a same feature sequence of the first waveform, where the first feature units of the foregoing second waveform are constituted by a part for generating a to-be-transmitted signal by using the first waveform, and the second feature units of the foregoing second waveform are constituted by a part for generating the to-be-transmitted signal without using the first waveform.

In a possible implementation, the first feature units or the second feature units included in the set of feature units of the foregoing second waveform correspond to bits before source bit encoding; or the first feature units or the second feature units included in the set of feature units of the foregoing second waveform correspond to bits after the source bit encoding, where the foregoing encoding includes Manchester encoding.

In a possible implementation, the foregoing first signal includes at least one of a low-power wake-up signal, a low-power beacon signal, a low-power hold signal, a low-power synchronization signal, or a low-power reference signal.

In a possible implementation, the foregoing terminal has a capability of detecting the first waveform.

In a possible implementation, the signal transmission apparatus 60 provided in this embodiment of this application further includes an obtaining module and a determining module. The obtaining module is configured to obtain information carried in the first waveform and information carried in the second waveform after the foregoing detection module 62 detects the first signal based on the first information. The determining module is configured to determine, based on the information carried in the first waveform and the information carried in the second waveform obtained by the obtaining module, information carried in the first signal.

The signal transmission apparatus in embodiments of this application may be a terminal, for example, a terminal having an operating system, or may be a component in the terminal, for example, an integrated circuit or a chip. For example, the terminal may include but is not limited to the foregoing listed types of the terminal 11, and the another device may be a server, a network attached storage (Network Attached Storage, NAS), or the like. This is not specifically limited in embodiments of this application.

The signal transmission apparatus provided in embodiments of this application can implement each process implemented in the foregoing method embodiment, and achieve the same technical effect. To avoid repetition, details are not described herein again.

FIG. 10 is a possible schematic structural diagram of a signal transmission apparatus involved in an embodiment of this application. As shown in FIG. 10, the signal transmission apparatus 70 may include a sending module 71.

The sending module 71 is configured to send first information to a terminal. The first information includes first indication information and a first mapping mode. The first indication information is used to indicate information carried in a first waveform. The first mapping mode is a mapping mode between the first waveform and a second waveform. The first information is used to detect a first signal by the terminal. The first signal is a signal transmitted based on the first waveform and the second waveform. The first waveform includes at least an OFDM waveform, and the second waveform includes at least one of an OOK waveform or an FSK waveform.

Embodiment of this application provide a signal transmission apparatus. The signal transmission apparatus may send the first information of the first signal to the terminal, so that the terminal may detect, based on the first information, that is, the information carried in the first waveform and the mapping mode between the first waveform and the second waveform, the first signal transmitted based on the first waveform and the second waveform. In other words, in this solution, the information carried in the first waveform is indicated to the terminal through the first indication information, and the mapping mode between the information carried in the first waveform and information carried in the second waveform can be determined by the information carried in the first waveform and the mapping mode for the superposed waveform (including the first waveform and the second waveform). That is to say, the mapping mode between the OFDM sequence and the feature information of the OOK signal or the FSK signal is obtained, so as to obtain the information carried in the second waveform, so that the terminal can accurately detect the low-power signal based on the first waveform and the second waveform, thereby obtaining the information carried in the first waveform and the second waveform, that is, all information carried in the superposed waveform, reducing complexity of detecting the low-power signal, and improving reliability of detecting the low-power signal.

In a possible implementation, the foregoing first indication information is specifically used to indicate at least one of the following:

at least one feature sequence of the first waveform and information carried in each of the at least one feature sequence, where the feature sequence is a feature sequence for generating the first signal; or
a type of the information carried in the first waveform.

In a possible implementation, the foregoing first indication information is specifically used to indicate a type of information carried in the first waveform, and the information carried in the foregoing first waveform satisfies any one of the following:

information carried in all feature sequences of the first waveform is the same as information carried in the second waveform;
the information carried in all feature sequences of the first waveform includes the information carried in the second waveform and additional information; or
all feature sequences of the first waveform carry only the additional information other than the information carried in the second waveform.

In a possible implementation, the foregoing first mapping mode includes any one of the following:

dividing a set of feature units of the second waveform into subsets each including M feature units, to obtain K subsets, where the M feature units include at least one of first feature units and second feature units, all first feature units included in each subset are mapped to a same feature sequence of the first waveform, and M and K are both positive integers;
dividing a set of feature units of the second waveform into subsets each including M first feature units, to obtain K subsets, where the M first feature units included in each subset are mapped to a same feature sequence of the first waveform, and M and K are both positive integers;
mapping each first feature unit of the second waveform to a feature sequence of the first waveform independently; or
mapping all first feature units of the second waveform to a same feature sequence of the first waveform, where the first feature units of the foregoing second waveform are constituted by a part for generating a to-be-transmitted signal by using the first waveform, and the second feature units of the foregoing second waveform are constituted by a part for generating the to-be-transmitted signal without using the first waveform.

In a possible implementation, the first feature units or the second feature units included in the set of feature units of the foregoing second waveform correspond to bits before source bit encoding; or the first feature units or the second feature units included in the set of feature units of the foregoing second waveform correspond to bits after the source bit encoding, where the foregoing encoding includes Manchester encoding.

In a possible implementation, the foregoing first signal includes at least one of a low-power wake-up signal, a low-power beacon signal, a low-power hold signal, a low-power synchronization signal, or a low-power reference signal.

The signal transmission apparatus provided in embodiments of this application can implement each process implemented in the foregoing method embodiment, and achieve the same technical effect. To avoid repetition, details are not described herein again.

As shown in FIG. 11, an embodiment of this application further provides a communication device 5000, including a processor 5001 and a memory 5002. The memory 5002 stores a program or an instruction executable in the processor 5001. For example, when the communication device 5000 is the foregoing terminal, the program or the instruction, when executed by the processor 5001, implements the steps of the method embodiments of the foregoing terminal side, and can achieve the same technical effect. To avoid repetition, details are not described herein again. When the communication device 5000 is the foregoing network side device, the program or the instruction, when executed by the processor 5001, implements the steps in the method embodiments of the foregoing network side device side, and can achieve the same technical effect. To avoid repetition, details are not described herein again.

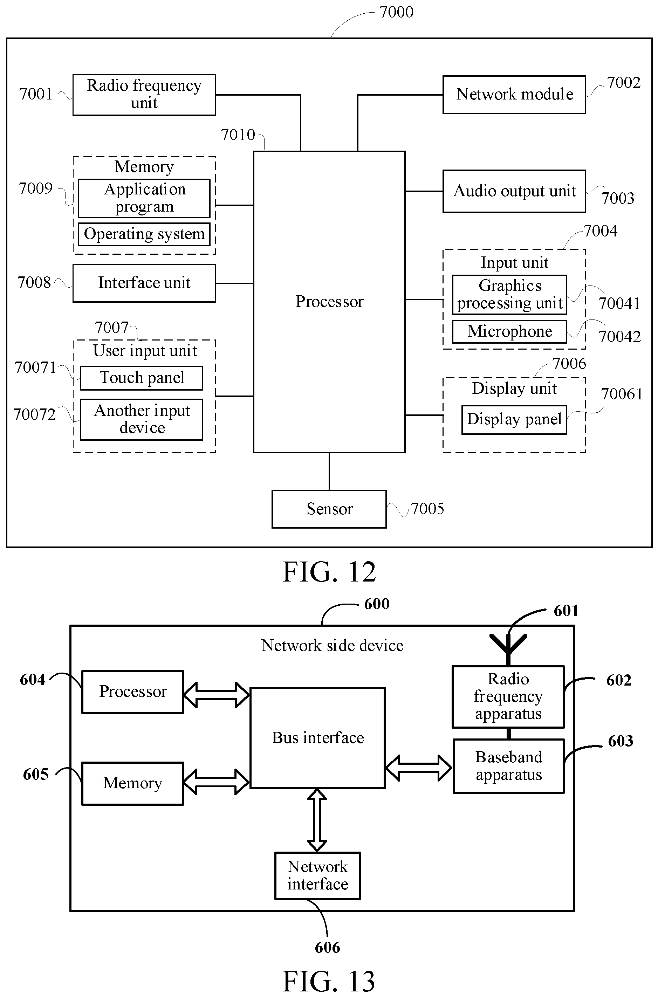

An embodiment of this application further provides a terminal, including a processor and a communication interface. The communication interface is coupled to the processor, and the processor is configured to run a program or an instruction, to implement the steps of the foregoing method embodiment. The terminal embodiment corresponds to the foregoing method embodiment of the terminal side. The implementation processes and implementations of the foregoing method embodiment are all applicable to the terminal embodiment, and can achieve the same technical effect. Specifically, FIG. 12 is a schematic diagram of a hardware structure of a terminal for implementing an embodiment of this application.

A terminal 7000 includes, but is not limited to, at least some components such as a radio frequency unit 7001, a network module 7002, an audio output unit 7003, an input unit 7004, a sensor 7005, a display unit 7006, a user input unit 7007, an interface unit 7008, a memory 7009, and a processor 7010.

A person skilled in the art may understand that the terminal 7000 may further include a power supply (for example, a battery) that supplies power to the components. The power supply may be logically connected to the processor 7010 through a power management system, to implement functions such as management of charging, discharging, and power consumption through the power management system. The terminal structure shown in FIG. 12 constitutes no limitation on the terminal, and the terminal may include more or fewer components than those shown in the figure, or some merged components, or different component arrangements. Details are not described herein again.

It should be noted that, in this embodiment of this application, the input unit 7004 may include a graphics processing unit (Graphics Processing Unit, GPU) 70041 and a microphone 70042. The graphics processing unit 70041 processes image data of a static picture or a video obtained by an image capturing apparatus (for example, a camera) in a video capturing mode or an image capturing mode. The display unit 7006 may include a display panel 70061. The display panel 70061 may be configured in a form such as a liquid crystal display or an organic light-emitting diode. The user input unit 7007 includes at least one of a touch panel 70071 or another input device 70072. The touch panel 70071 is also referred to as a touchscreen. The touch panel 70071 may include two parts: a touch detection apparatus and a touch controller. The another input device 70072 may include but is not limited to a physical keyboard, a function button (for example, a volume control button or a power button), a trackball, a mouse, and a joystick. Details are not described herein again.

In this embodiment of this application, the radio frequency unit 7001 receives downlink data from a network side device and may provide the downlink data to the processor x10 for processing. In addition, the radio frequency unit 7001 may send uplink data to the network side device. Generally, the radio frequency unit 7001 includes but is not limited to an antenna, an amplifier, a transceiver, a coupler, a low noise amplifier, a duplexer, and the like.

The memory 7009 may be configured to store a software program or an instruction and various data. The memory 7009 may mainly include a first storage area for storing a program or an instruction and a second storage area for storing data. The first storage area may store an operating system, an application program or an instruction required for at least one function (such as a sound playback function and an image playback function), and the like. In addition, the memory 7009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 7009 in this embodiment of this application includes, but is not limited to, these memories and any other suitable types of memories.

The processor 7010 may include one or more processing units. Optionally, the processor 7010 integrates an application processor and a modem processor. The application processor mainly processes operations related to an operating system, a user interface, an application program, and the like. The modem processor mainly processes wireless communication signals, and is, for example, a baseband processor. It may be understood that the foregoing modem processor may alternatively not be integrated into the processor 7010.

The foregoing radio frequency unit 7001 is configured to receive first information from a network side device, where the first information includes first indication information and a first mapping mode, the first indication information is used to indicate information carried in a first waveform, and the first mapping mode is a mapping mode between the first waveform and a second waveform. The foregoing processor 7010 is configured to detect a first signal based on the first information, where the first signal is a signal transmitted based on the first waveform and the second waveform. The first waveform includes at least an OFDM waveform, and the second waveform includes at least one of an OOK waveform or an FSK waveform.

Embodiment of this application provide a terminal. The terminal may receive the first information of the first signal from the network side, and detect, based on the first information, that is, the information carried in the first waveform and the mapping mode between the first waveform and the second waveform, the first signal transmitted according to the first waveform and the second waveform. In other words, in this solution, the information carried in the first waveform is indicated to the terminal through the first indication information, and the mapping mode between the information carried in the first waveform and information carried in the second waveform can be determined by the information carried in the first waveform and the mapping mode for the superposed waveform (including the first waveform and the second waveform). That is to say, the mapping mode between the OFDM sequence and the feature information of the OOK signal or the FSK signal is obtained, so as to obtain the information carried in the second waveform, so that the terminal can accurately detect the low-power signal based on the first waveform and the second waveform, thereby obtaining the information carried in the first waveform and the second waveform, that is, all information carried in the superposed waveform, reducing complexity of detecting the low-power signal, and improving reliability of detecting the low-power signal.

Optionally, the foregoing first indication information is specifically used to indicate at least one of the following:

at least one feature sequence of the first waveform and information carried in each of the at least one feature sequence, where the feature sequence is a feature sequence for generating the first signal; or
a type of the information carried in the first waveform.

Optionally, the foregoing first indication information is specifically used to indicate a type of information carried in the first waveform, and the information carried in the foregoing first waveform satisfies any one of the following:

information carried in all feature sequences of the first waveform is the same as information carried in the second waveform;
the information carried in all feature sequences of the first waveform includes the information carried in the second waveform and additional information; or
all feature sequences of the first waveform carry only the additional information other than the information carried in the second waveform.

Optionally, the foregoing first mapping mode includes any one of the following:

dividing a set of feature units of the second waveform into subsets each including M feature units, to obtain K subsets, where the M feature units include at least one of first feature units and second feature units, all first feature units included in each subset are mapped to a same feature sequence of the first waveform, and M and K are both positive integers;
dividing a set of feature units of the second waveform into subsets each including M first feature units, to obtain K subsets, where the M first feature units included in each subset are mapped to a same feature sequence of the first waveform, and M and K are both positive integers;
mapping each first feature unit of the second waveform to a feature sequence of the first waveform independently; or
mapping all first feature units of the second waveform to a same feature sequence of the first waveform, where
the first feature units of the foregoing second waveform are constituted by a part for generating a to-be-transmitted signal by using the first waveform, and the second feature units of the foregoing second waveform are constituted by a part for generating the to-be-transmitted signal without using the first waveform.

Optionally, the first feature units or the second feature units included in the set of feature units of the foregoing second waveform correspond to bits before source bit encoding; or the first feature units or the second feature units included in the set of feature units of the foregoing second waveform correspond to bits after the source bit encoding. The foregoing encoding includes Manchester encoding.

Optionally, the foregoing first signal includes at least one of a low-power wake-up signal, a low-power beacon signal, a low-power hold signal, a low-power synchronization signal, or a low-power reference signal.

Optionally, the foregoing terminal has a capability of detecting the first waveform.

Optionally, the foregoing processor 7010 is further configured to obtain information carried in the first waveform and information carried in the second waveform after the first signal is detected based on the first information, and determine, based on the information carried in the first waveform and the information carried in the second waveform, information carried in the first signal.

It may be understood that the implementation process of each implementation in the embodiment of the terminal may refer to the relevant description of the foregoing method embodiments, and the same or corresponding technical effect is achieved. To avoid repetition, details are not described herein again.

An embodiment of this application further provides a network side device, including a processor and a communication interface. The communication interface is coupled to the processor, and the processor is configured to run a program or an instruction, to implement the steps of the foregoing method embodiment. An embodiment of the network side device corresponds to the foregoing method embodiment of the network side device. Each implementation process and implementation of the foregoing method embodiment can be applied to this embodiment of the network side device, and can achieve the same technical effect.

Specifically, an embodiment of this application further provides a network side device. As shown in FIG. 13, the network side device 600 includes an antenna 601, a radio frequency apparatus 602, a baseband apparatus 603, a processor 604, and a memory 605. The antenna 601 is connected to the radio frequency apparatus 602. In an uplink direction, the radio frequency apparatus 602 receives information through the antenna 601, and sends the received information to the baseband apparatus 603 for processing. In a downlink direction, the baseband apparatus 603 processes to-be-sent information, and sends the processed to-be-sent information to the radio frequency apparatus 602. The radio frequency apparatus 602 processes the received information, and then sends the processed information through the antenna 601.

The method performed by the network side device in the foregoing embodiment may be implemented by the baseband apparatus 603. The baseband apparatus 603 includes a baseband processor.

The baseband apparatus 603 may include, for example, at least one baseband board. A plurality of chips are arranged on the baseband board, as shown in FIG. 13. One of the chips is, for example, a baseband processor, and is connected to the memory 605 through a bus interface to call a program in the memory 605, to perform the operations of the network device shown in the foregoing method embodiment.

The network side device may further include a network interface 606. The interface is, for example, a common public radio interface (Common Public Radio Interface, CPRI).

Specifically, the network side device 600 in this embodiment of this application further includes an instruction or a program stored in the memory 605 and executable on the processor 604. The processor 604 invokes the instruction or the program in the memory 605 to perform the method performed by each module shown in the foregoing embodiment, and achieves the same technical effect. To avoid repetition, details are not described herein again.

The foregoing radio frequency apparatus 602 is configured to send first information to a terminal. The first information includes first indication information and a first mapping mode. The first indication information is used to indicate information carried in a first waveform. The first mapping mode is a mapping mode between the first waveform and a second waveform. The first information is used to detect a first signal by the terminal. The first signal is a signal transmitted based on the first waveform and the second waveform. The first waveform includes at least an OFDM waveform, and the second waveform includes at least one of an OOK waveform or an FSK waveform.

Embodiment of this application provide a network side device. The network side device may send the first information of the first signal to the terminal, so that the terminal may detect, based on the first information, that is, the information carried in the first waveform and the mapping mode between the first waveform and the second waveform, the first signal transmitted based on the first waveform and the second waveform. In other words, in this solution, the information carried in the first waveform is indicated to the terminal through the first indication information, and the mapping mode between the information carried in the first waveform and information carried in the second waveform can be determined by the information carried in the first waveform and the mapping mode for the superposed waveform (including the first waveform and the second waveform). That is to say, the mapping mode between the OFDM sequence and the feature information of the OOK signal or the FSK signal is obtained, so as to obtain the information carried in the second waveform, so that the terminal can accurately detect the low-power signal based on the first waveform and the second waveform, thereby obtaining the information carried in the first waveform and the second waveform, that is, all information carried in the superposed waveform, reducing complexity of detecting the low-power signal, and improving reliability of detecting the low-power signal.

In a possible implementation, the foregoing first indication information is specifically used to indicate at least one of the following:

at least one feature sequence of the first waveform and information carried in each of the at least one feature sequence, where the feature sequence is a feature sequence for generating the first signal; or
a type of the information carried in the first waveform.

In a possible implementation, the foregoing first indication information is specifically used to indicate a type of information carried in the first waveform, and the information carried in the foregoing first waveform satisfies any one of the following:

information carried in all feature sequences of the first waveform is the same as information carried in the second waveform;
the information carried in all feature sequences of the first waveform includes the information carried in the second waveform and additional information; or
all feature sequences of the first waveform carry only the additional information other than the information carried in the second waveform.

In a possible implementation, the foregoing first mapping mode includes any one of the following:

dividing a set of feature units of the second waveform into subsets each including M feature units, to obtain K subsets, where the M feature units include at least one of first feature units and second feature units, all first feature units included in each subset are mapped to a same feature sequence of the first waveform, and M and K are both positive integers;
dividing a set of feature units of the second waveform into subsets each including M first feature units, to obtain K subsets, where the M first feature units included in each subset are mapped to a same feature sequence of the first waveform, and M and K are both positive integers;
mapping each first feature unit of the second waveform to a feature sequence of the first waveform independently; or
mapping all first feature units of the second waveform to a same feature sequence of the first waveform, where the first feature units of the foregoing second waveform are constituted by a part for generating a to-be-transmitted signal by using the first waveform, and the second feature units of the foregoing second waveform are constituted by a part for generating the to-be-transmitted signal without using the first waveform.

In a possible implementation, the first feature units or the second feature units included in the set of feature units of the foregoing second waveform correspond to bits before source bit encoding; or the first feature units or the second feature units included in the set of feature units of the foregoing second waveform correspond to bits after the source bit encoding, where the foregoing encoding includes Manchester encoding.

In a possible implementation, the foregoing first signal includes at least one of a low-power wake-up signal, a low-power beacon signal, a low-power hold signal, a low-power synchronization signal, or a low-power reference signal.

It may be understood that the implementation process of each implementation in the embodiment of the network side device may refer to the relevant description of the foregoing method embodiments, and the same or corresponding technical effect is achieved. To avoid repetition, details are not described herein again.

An embodiment of this application further provides a readable storage medium. The readable storage medium stores a program or an instruction. The program or the instruction, when executed by a processor, implements the processes of the foregoing embodiments of the signal transmission method, and can achieve the same technical effect. To avoid repetition, details are not described herein again.

The processor may be a processor of the terminal in the foregoing embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor. The processor is configured to run a program or an instruction, to implement the processes of the foregoing embodiments of the signal transmission method, and can achieve the same technical effect. To avoid repetition, details are not described herein again.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the foregoing embodiments of the signal transmission method, and can achieve the same technical effect. To avoid repetition, details are not described herein again.

An embodiment of this application further provides a wireless communication system, including a terminal and a network side device. The terminal may be configured to perform the steps of the foregoing signal transmission method. The network side device may be configured to perform the steps of the foregoing signal transmission method.

It should be noted that in this specification, terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by a phrase "include one ..." does not exclude existence of an additional same element in the process, the method, the article, or the apparatus that includes the element. In addition, it should be noted that the scope of the method and the apparatus in the implementations of this application is not limited to function execution in the order shown or discussed, and may further include function execution in a substantially simultaneous manner or in a reverse order based on the involved functions. For example, the described method may be performed in an order different from the described order, and various steps may also be added, omitted, or combined. In addition, features described with reference to some examples may be combined in another example.

According to the descriptions of the foregoing implementations, a person skilled in the art may clearly learn that the method in the foregoing embodiments may be implemented by a computer software product with a necessary universal hardware platform, or may be implemented by hardware. The computer software product is stored in a storage medium (for example, a ROM, a RAM, a magnetic disk, or an optical disc) and includes several instructions, to enable the terminal or the network side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection of this application.

## Claims

1. A signal transmission method, comprising:

   receiving, by a terminal, first information from a network side device, wherein the first information comprises first indication information and a first mapping mode, the first indication information is used to indicate information carried in a first waveform, and the first mapping mode is a mapping mode between the first waveform and a second waveform; and
   detecting, by the terminal, a first signal based on the first information, wherein the first signal is a signal transmitted based on the first waveform and the second waveform, wherein
   the first waveform comprises at least an orthogonal frequency division multiplexing OFDM waveform, and the second waveform comprises at least one of an on-off keying OOK waveform or a frequency-shift keying FSK waveform.

2. The method according to claim 1, wherein the first indication information is specifically used to indicate at least one of the following:

   at least one feature sequence of the first waveform and information carried in each of the at least one feature sequence, wherein the feature sequence is a feature sequence for generating the first signal; or
   a type of the information carried in the first waveform.

3. The method according to claim 2, wherein the first indication information is specifically used to indicate the type of the information carried in the first waveform; and
   the information carried in the first waveform satisfies any one of the following conditions:

   information carried in all feature sequences of the first waveform is the same as information carried in the second waveform;
   the information carried in all feature sequences of the first waveform comprises the information carried in the second waveform and additional information; or

all feature sequences of the first waveform carry only the additional information other than the information carried in the second waveform.

4. The method according to any one of claims 1 to 3, wherein the first mapping mode comprises any one of the following:

dividing a set of feature units of the second waveform into subsets each comprising M feature units, to obtain K subsets, wherein the M feature units comprise at least one of first feature units and second feature units, all first feature units comprised in each subset are mapped to a same feature sequence of the first waveform, and M and K are both positive integers;

dividing a set of feature units of the second waveform into subsets each comprising M first feature units, to obtain K subsets, wherein the M first feature units comprised in each subset are mapped to a same feature sequence of the first waveform, and M and K are both positive integers;

mapping each first feature unit of the second waveform to a feature sequence of the first waveform independently; or

mapping all first feature units of the second waveform to a same feature sequence of the first waveform, wherein the first feature units of the second waveform are constituted by a part for generating a to-be-transmitted signal by using the first waveform, and the second feature units of the second waveform are constituted by a part for generating the to-be-transmitted signal without using the first waveform.

5. The method according to claim 4, wherein the first feature units or the second feature units comprised in the set of feature units of the second waveform correspond to bits before source bit encoding;

or

the first feature units or the second feature units comprised in the set of feature units of the second waveform correspond to bits after the source bit encoding, wherein

the encoding comprises Manchester encoding.

6. The method according to any one of claims 1 to 5, wherein the first signal comprises at least one of a low-power wake-up signal, a low-power beacon signal, a low-power hold signal, a low-power synchronization signal, or a low-power reference signal.

7. The method according to any one of claims 1 to 6, wherein the terminal has a capability to detect the first waveform.

8. The method according to any one of claims 1 to 7, wherein after the detecting, by the terminal, a first signal based on the first information, the method further comprises:

obtaining, by the terminal, the information carried in the first waveform and the information carried in the second waveform; and

determining, by the terminal based on the information carried in the first waveform and the information carried in the second waveform, information carried in the first signal.

9. A signal transmission method, comprising:

sending, by a network side device, first information to a terminal, wherein the first information comprises first indication information and a first mapping mode, the first indication information is used to indicate information carried in a first waveform, and the first mapping mode is a mapping mode between the first waveform and a second waveform; and

the first information is used by the terminal to detect a first signal, the first signal is a signal transmitted based on the first waveform and the second waveform, the first waveform comprises at least an orthogonal frequency division multiplexing OFDM waveform, and the second waveform comprises at least one of an on-off keying OOK waveform or a frequency-shift keying FSK waveform.

10. The method according to claim 9, wherein the first indication information is specifically used to indicate at least one of the following:

at least one feature sequence of the first waveform and information carried in each of the at least one feature sequence, wherein the feature sequence is a feature sequence for generating the first signal; or

a type of the information carried in the first waveform.

11. The method according to claim 10, wherein the first indication information is specifically used to indicate the type of the information carried in the first waveform; and
the information carried in the first waveform satisfies any one of the following conditions:

information carried in all feature sequences of the first waveform is the same as information carried in the second waveform;

the information carried in all feature sequences of the first waveform comprises the information carried in the second waveform and additional information; or

all feature sequences of the first waveform carry only the additional information other than the information carried in the second waveform.

12. The method according to any one of claims 9 to 11, wherein the first mapping mode comprises any one of the following:

dividing a set of feature units of the second waveform into subsets each comprising M feature units, to obtain K subsets, wherein the M feature units comprise at least one of first feature units and second feature units, all first feature units comprised in each subset are mapped to a same feature sequence of the first waveform, and M and K are both positive integers;

dividing a set of feature units of the second waveform into subsets each comprising M first feature units, to obtain K subsets, wherein the M first feature units comprised in each subset are mapped to a same feature sequence of the first waveform, and M and K are both positive integers;

mapping each first feature unit of the second waveform to a feature sequence of the first waveform independently; or

mapping all first feature units of the second waveform to a same feature sequence of the first waveform, wherein the first feature units of the second waveform are constituted by a part for generating a to-be-transmitted signal by using the first waveform, and the second feature units of the second waveform are constituted by a part for generating the to-be-transmitted signal without using the first waveform.

13. The method according to claim 12, wherein the first feature units or the second feature units comprised in the set of feature units of the second waveform correspond to bits before source bit encoding;
or

the first feature units or the second feature units comprised in the set of feature units of the second waveform correspond to bits after the source bit encoding, wherein
the encoding comprises Manchester encoding.

14. The method according to any one of claims 9 to 13, wherein the first signal comprises at least one of a low-power wake-up signal, a low-power beacon signal, a low-power hold signal, a low-power synchronization signal, or a low-power reference signal.

15. A signal transmission apparatus, comprising a receiving module and a detection module, wherein

the receiving module is configured to receive first information from a network side device, wherein the first information comprises first indication information and a first mapping mode, the first indication information is used to indicate information carried in a first waveform, and the first mapping mode is a mapping mode between the first waveform and a second waveform; and

the detection module is configured to detect a first signal based on the first information received by the receiving module, and the first signal is a signal transmitted based on the first waveform and the second waveform, wherein the first waveform comprises at least an orthogonal frequency division multiplexing OFDM waveform, and the second waveform comprises at least one of an on-off keying OOK waveform or a frequency-shift keying FSK waveform.

16. A signal transmission apparatus, comprising: a sending module, wherein

the sending module is configured to send first information to a terminal, wherein the first information comprises first indication information and a first mapping mode, the first indication information is used to indicate information carried in a first waveform, and the first mapping mode is a mapping mode between the first waveform and a second waveform; and

the first information is used by the terminal to detect a first signal, the first signal is a signal transmitted based on the first waveform and the second waveform, the first waveform comprises at least an orthogonal frequency division multiplexing OFDM waveform, and the second waveform comprises at least one of an on-off keying OOK waveform or a frequency-shift keying FSK waveform.

17. A terminal, comprising a processor and a memory, wherein the memory stores a program or an instruction executable in the processor, and the program or the instruction, when executed by the processor, implements the steps of the signal transmission method according to any one of claims 1 to 8.

18. A network side device, comprising a processor and a memory, wherein the memory stores a program or an instruction executable in the processor, and the program or the instruction, when executed by the processor, implements the steps of the signal transmission method according to any one of claims 9 to 14.

19. A communication system, comprising the signal transmission apparatus according to claim 15 and the signal transmission apparatus according to claim 16; or comprising the terminal according to claim 17 and the network side device according to claim 18.

20. A readable storage medium, storing a program or an instruction, wherein the program or the instruction, when executed by a processor, implements the signal transmission method according to any one of claims 1 to 8, or implements the steps of the signal transmission method according to any one of claims 9 to 14.

FIG. 1

FIG. 2

(A)

(B)

FIG. 3

OOK bit=1      OOK bit=1      OOK bit=0

Time

OFDM bits=4      OFDM bits=4      OFDM bits=4

## FIG. 4

Terminal      Network side device

201: Send first information

202: Receive the first information

203: Detect a first signal based on the first information

## FIG. 5

Subset 1 | Subset 2 | Subset 3 | Subset 4

1000 | 1101 | 0101 | 1010

Same OFDM sequence: carry N pieces of bit information      Same OFDM sequence: carry N pieces of bit information

## FIG. 6

Subset 1 | Subset 2 | Subset 3 | Subset 4

1000 1101 0101 1010

1   1 1   1 1   1 1

Same OFDM sequence: carry N pieces of bit information      Same OFDM sequence: carry N pieces of bit information

## FIG. 7

Terminal                Network side device

201: Send first information

202: Receive the first information

203: Detect a first signal based on the first information

204: Obtain information carried in a first waveform and information carried in a second waveform

205: Determine, based on the information carried in the first waveform and the information carried in the second waveform, information carried in the first signal

## FIG. 8

Signal transmission apparatus — 60

Receiving module — 61

Detection module — 62

## FIG. 9

Signal transmission apparatus — 70

Sending module — 71

## FIG. 10

— 5000

Communication device

5001 — Processor ⟷ Memory — 5002

## FIG. 11

7000

| | | |
|---|---|---|
| 7001 | Radio frequency unit | |
| | | Network module | 7002 |

7010

| Memory |
|---|
| 7009 | Application program |
| Operating system |

| 7008 | Interface unit |

Processor

| Audio output unit | 7003 |

7004

| Input unit |
|---|
| Graphics processing unit | 70041 |
| Microphone | 70042 |

7007

| User input unit |
|---|
| 70071 | Touch panel |
| 70072 | Another input device |

7006

| Display unit | 70061 |
|---|
| Display panel |

| Sensor | 7005 |

**FIG. 12**

600                                        601

**Network side device**

| 604 | Processor | ⟺ | | | Radio frequency apparatus | 602 |

Bus interface

| 605 | Memory | ⟺ | | | Baseband apparatus | 603 |

Network interface

606

**FIG. 13**

## INTERNATIONAL SEARCH REPORT

| International application No. |
| --- |
| **PCT/CN2024/107008** |

### A. CLASSIFICATION OF SUBJECT MATTER

H04W 72/23(2023.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNKI, CNTXT, ENTXTC, WPABS, ENTXT, 3GPP: 终端, 网络设备, 开关键控, 频移键控, 通断键控, 映射, 正交频分复用, 指示, 波形, 序列, 子集, 比特, 唤醒, 低功耗, UE, network device, OOK, FSK, OFDM, indication, waveform, sequence, subset, bit, wake up, low power consumption

### C. DOCUMENTS CONSIDERED TO BE RELEVANT

| Category* | Citation of document, with indication, where appropriate, of the relevant passages | Relevant to claim No. |
| --- | --- | --- |
| A | CN 116155443 A (VIVO MOBILE COMMUNICATION CO., LTD.) 23 May 2023 (2023-05-23)<br>entire document | 1-20 |
| A | CN 113498598 A (IDAC HOLDINGS, INC.) 12 October 2021 (2021-10-12)<br>entire document | 1-20 |
| A | CN 112166584 A (SONY CORP.) 01 January 2021 (2021-01-01)<br>entire document | 1-20 |
| A | WO 2019157748 A1 (HUAWEI TECHNOLOGIES CO., LTD.) 22 August 2019 (2019-08-22)<br>entire document | 1-20 |
| A | HUAWEI. "Introduction of NG UE Capability Info Indication"<br>*3GPP tsg_ran\WG3_Iu. R3-172594*, 29 June 2017 (2017-06-29),<br>entire document | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 October 2024** | **25 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/107008**

| Patent document cited in search report | | | Publication date (day/month/year) | Patent family member(s) | | | Publication date (day/month/year) |
|---|---|---|---|---|---|---|---|
| CN | 116155443 | A | 23 May 2023 | None | | | |
| CN | 113498598 | A | 12 October 2021 | WO | 2020172549 | A1 | 27 August 2020 |
| | | | | BR | 112021016607 | A2 | 03 November 2021 |
| | | | | US | 2022095228 | A1 | 24 March 2022 |
| | | | | EP | 3928482 | A1 | 29 December 2021 |
| | | | | JP | 2022521331 | A | 06 April 2022 |
| CN | 112166584 | A | 01 January 2021 | EP | 3804250 | A1 | 14 April 2021 |
| | | | | EP | 3804250 | B1 | 11 October 2023 |
| | | | | US | 2022021494 | A1 | 20 January 2022 |
| | | | | US | 11838160 | B2 | 05 December 2023 |
| | | | | WO | 2019229266 | A1 | 05 December 2019 |
| WO | 2019157748 | A1 | 22 August 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310948229